**Europäisches Patentamt**

**European Patent Office**

**Office européen des brevets**

(19)

(11) **EP 1 529 714 A2**

(12) # EUROPEAN PATENT APPLICATION

(43) Date of publication:
**11.05.2005 Bulletin 2005/19**

(51) Int Cl.7: **B62D 1/187**

(21) Application number: **04026384.0**

(22) Date of filing: **05.11.2004**

(84) Designated Contracting States:
**AT BE BG CH CY CZ DE DK EE ES FI FR GB GR HU IE IS IT LI LU MC NL PL PT RO SE SI SK TR**
Designated Extension States:
**AL HR LT LV MK YU**

(30) Priority: **07.11.2003 JP 2003378080**

(71) Applicants:
• **NSK Ltd.,**
  **Shinagawa-ku, Tokyo (JP)**

• **NSK STEERING SYSTEMS Co., Ltd.**
  **Shinagawa-ku, Tokyo (JP)**

(72) Inventor: **Yamada, Jun**
  **Maebashi-shi Gunma-ken (JP)**

(74) Representative: **Grünecker, Kinkeldey, Stockmair & Schwanhäusser Anwaltssozietät Maximilianstrasse 58 80538 München (DE)**

(54) **Steering column clamping apparatus**

(57) A steering apparatus includes an inner column (11) which rotatably supports a steering shaft (S); an outer jacket (21) which incorporates the inner column (11) shiftably in an axial direction, at least a portion of the outer jacket (21) being cylindrical; and a clamping member (14) for clamping the inner column radially. The outer jacket (21) includes a flange (21d) which extends in a direction leaving an axial line of the outer jacket from the cylindrical outer periphery of the outer jacket and is urged by the urging member (14), and a slit (21e) which extends in the axial line direction to cross the flange. Assuming that the center of the slit is at an angle of 0°, the average thickness of the outer jacket to the tip of the flange within a range from 90° to 135° around the axial line of the outer jacket is larger than that within a range from 135° to 180°.

*FIG. 5*

EP 1 529 714 A2

# Description

## BACKGROUND OF THE INVENTION

Field of the Invention

This invention relates to a steering apparatus, and more particularly to a tilt-telescopic steering apparatus capable of adjusting the tilting angle of a steering wheel and the position thereof in an axial direction according to the driving posture of a driver.

Background Art

A previously known steering apparatus for a motor vehicle is a tilt-telescopic steering capable of the tilting angle of a steering wheel according to the physique and driving attitude of a driver and the axial position of the steering wheel.

Now, in order to assure the space in the vicinity of the knee of the driver, there is an idea of locating the components of the tip-telescopic steering apparatus at a possibly near position to a steering shaft. On the other hand, JP-T-10-512826 (the term "JP-T" as used herein means a published Japanese translation of a PCT patent application) discloses a steering apparatus in which the yoke supporting the steering shaft arranged in an outer column tube is shifted along a vertical groove formed at a pair of bracket segments, thereby adjusting the tilting angle of the steering shaft.

## SUMMARY OF THE INVENTION

Meanwhile, according to the above prior art, since the yoke is provided between the outer column tube and the steering shaft, in order to realize the telescopic adjustment in this structure, it is necessary to provide an inner column tube having a long slot in an axial direction outside the yoke in the radial direction, separately from the outer column tube. However, the provision of the inner column tube outside the yoke presents a problem of large-scaling of the device. Further, in such a case, a certain gap allowing relative sliding during the adjustment must be provided between the inner column tube and the yoke. If the gap is large, a back-lash may be generated. On the other hand, if the gap is small, the sliding resistance increases. This presents a problem that dimension adjustment of the gap must be strictly carried out. Further, a gap for relative sliding must be provided also between the inner column tube and the outer column tube. This gives rise to the same problem and also increases the labor and time of machining.

In order to solve such a problem, the inventors of this invention have developed a steering apparatus in which a cylindrical outer jacket incorporating an inner column movably in an axial direction is provided and using the friction force acted between its diameter-reduced portion and the inner column is used to fix the inner column. However, it has been found that if a flange is provided in order to press the outer jacket radially from the outside, the rigidity of the outer jacket is further increased, thereby making it difficult to reduce the diameter of the outer diameter.

In view of the problems of the above prior art, this invention has been accomplished, and intends to provide a steering apparatus having an outer jacket with optimized balance of rigidity.

The steering apparatus according to the first invention is a steering apparatus including

an inner column which rotatably supports a steering shaft;

an outer jacket which incorporates the inner column shiftably in an axial direction, at least a portion of the outer jacket being cylindrical; and

an urging member for urging the inner column radially, wherein the outer jacket includes a flange which extends in a direction leaving an axial line of the outer jacket from the cylindrical outer periphery of the outer jacket and is urged by the urging member, a slit which extends in the axial line direction to cross the flange, and

assuming that the center of the slit is at an angle of 0°, the average value of the radial distance from the cylindrical outer periphery of the outer jacket to the tip of the flange within a range from 90° to 135° around the axial line of the outer jacket is larger than that within a range from 135° to 180°.

The steering apparatus according to the second invention is a steering apparatus for supporting a steering shaft attached to a steering wheel shiftably in a direction of its axial line, comprising:

an inner column which rotatably supports the steering shaft;

a pair of bracket segments attached to a vehicle body and arranged at opposite positions with respect to the axial line of the steering shaft;

a tension member extended between the pair of bracket segments;

two fixing members for fixing the tension member from outside of the pair of bracket segments;

a displacement applying member arranged between the tension member and the fixing members for applying a relative displacement between the bracket segments and the fixing members in interlock with a movement of an operating lever; and

an outer jacket having a flange with an outer periphery to be in contact with the bracket segments by the relative displacement of the bracket segments at least between the pair of bracket segments, and an inner periphery wrapping the outer periphery of the inner column, at least a portion of the outer jacket being cylindrical; wherein the pair of bracket segments approach each other by the relative displacement given by the applying member so that a pressing force is given to the inner column through the flange of the outer jacket and the inner column is held at its axial position by the bracket segments through the outer jacket;

the outer jacket includes a slit which extends in the axial direction from the end of the outer jacket to cross the flange,

assuming that the center of the slit is at an angle of 0°, the average value of the radial distance from the cylindrical outer periphery of the outer jacket to the tip of the flange within a range from 90° to 135° around the axial line of the outer jacket is made larger than that within a range from 135° to 180°.

The steering apparatus according to the third invention is a steering apparatus including

an inner column which rotatably supports a steering shaft;

an outer jacket which incorporates the inner column shiftably in an axial line direction, at least a portion of the outer jacket being cylindrical; and

an urging member for urging the inner column radially, wherein the outer jacket includes a flange which extends in a direction leaving the axial line from the cylindrical outer periphery of the outer jacket and is urged by the urging member, a slit which extends in the axial line direction to cross the flange, and

the outer jacket has rigidity lower on the side far from the slit with respect to the axial line thereof than on the side near to the slit.

The steering apparatus according to the fourth invention is a steering apparatus including

an inner columnwhich rotatably supports a steering shaft;

an outer jacket which incorporates the inner column shiftably in an axial line direction, at least a portion of the outer jacket being cylindrical; and

an urging member for urging the inner column radially, wherein the outer jacket includes a flange which extends in a direction leaving the axial line from the cylindrical outer periphery of the outer jacket and is urged by the urging member, a slit which extends in the axial line direction to cross the flange, and

the outer jacket has a sectional thickness lower on the side far from the slit with respect to the axial line thereof than on the side near to the slit.

In the steering apparatus according to the first invention, the outer jacket includes a flange which extends in a direction leaving the axial line from the cylindrical outer periphery of the outer jacket and is urged by the urging member, a slit which extends in the axial line direction to cross the flange, and assuming that the center of the slit is at an angle of 0°, the average value of the radial distance from the cylindrical outer periphery of the outer jacket to the tip of the flange within a range from 90° to 135° around the axial line of the outer jacket is larger than that within a range from 135° to 180°. In such a configuration, since the slit is provided, the rigidity of the outer jacket is attenuated so that the diameter of the outer jacket can be easily decreased. Further, since the average value of the radial distance from the cylindrical outer periphery of the outer jacket to the tip of the flange within a range from 90° to 135° around the axial line of the outer jacket is made larger than that within a range from 135° to 180°, the flange can be easily deformed in a direction of closing the slit when it is urged in the direction of 90°, thereby optimizing the rigidity of the outer jacket. Incidentally, it should be noted that the radial distance from the cylindrical outer periphery of the outer jacket to the tip of the flange refers to a distance from the outer periphery to the point crossing the edge of the flange when a normal line is drawn from the cylindrical outer periphery (cylindrical inner periphery if the outer periphery of the outer periphery is not cylindrical).

On the section orthogonal to the axial line of the outer jacket, when a line coupling the axial line and center of the slit accords with a vertical line, the upper edge of the flange may be the highest at the position crossing the vertical line.

On the section orthogonal to the axial line of the outer jacket, when the line coupling the axial line and center of the slit accords with a vertical line, the upper edge of the flange is not present at the position crossing the vertical line.

Preferably, the urging member includes a headed bolt or nut for pressing the side edges of the flange through screw-engagement, and an upper end of each the side edges of the flange is located at a position higher than the head of the headedbolt or the nut. In accordance with this configuration, the urging force by the urging member is can be suitably transmitted to the outer jacket through the flange.

Preferably, the side edges of the flange are tapered to the vertical line. In accordance with such a configuration, using the urging force, the diameter of the outer jacket can be easily decreased.

Preferably, the center line of the fixing member is located on the side of the slit with respect to the axial line of the inner column. In accordance with such a configuration, the outer jacket can be deformed more easily to narrow the interval of the slit.

Preferably, the lower edges of the flange are tapered to approach the cylindrical outer periphery of the outer jacket at positions nearer to the slit. In this configuration, the diameter of the outer jacket can be decreased easily.

Preferably, the flange includes a first flange located near to the end of the outer jacket and a second flange far from the end thereof, and when the first flange and the second flange are superposed, the first flange is exposed at an angle of at least 180° from the slit. In this configuration, the diameter of the outer jacket can be easily decreased.

In the steering apparatus according to the second invention,

the outer jacket includes a slit which extends in the axial direction from the end of the outer jacket to cross the flange, and assuming that the center of the slit is at an angle of 0°, the average value of the radial distance from the cylindrical outer periphery of the outer jacket to the tip of the flange within a range from 90° to 135° around the axial line of the outer jacket is made larger than that within a range from 135° to 180°. In such a configuration, since the slit is provided, the rigidity of the outer jacket is attenuated so that the diameter of the outer jacket can be easily decreased. Further, since the average value of the radial distance from the cylindrical outer periphery of the outer jacket to the tip of the flange within a range from 90° to 135° around the axial line of the outer jacket is made larger than that within a range from 135° to 180°, the flange can be easily deformed in a direction of closing the slit when it is urged in the direction of 90°, thereby optimizing the rigidity of the outer jacket.

Additionally, according to the technique disclosed in JP-T-10-512826, as described above, the long slot for passing the yoke must be provided in the inner column tube (corresponding to the inner column in this invention). In this case, tightening load for fixing is applied to the inner column so that the presence of such a long slot attenuates the tightening rigidity of the inner column tube, thereby also reducing the tightening holding force. In order to obviate such an inconvenience, the countermeasure for improving the rigidity such as increasing the sectional thickness of the inner column tube is required. If the diameter of the inner column tube is increased, the yoke can probably be inserted while skewed from the end thereof. Such a configuration, however, is not practical because of the increased diameter of the inner column tube from the viewpoint of vehicle loading. Further, after the yoke has been inserted in the inner column, if the inner column tube is not rotated by 90°, the steering shaft cannot be inserted into the inner column. This may lead to difficulty in assembling. In short, the technique disclosed in JP-T-10-512826 is directed to a steering apparatus in which telescopic adjustment is not taken into consideration. On the other hand, in accordance with this invention, since the tension member is arranged outside the inner column, machining the above long slot is not required, thereby obviating the above difficulty. It should be noted that the long slot for stopping telescopic adjustment may be optionally provided.

Further, in accordance with this invention, the displacement appliedby the displacement applying member causes the pair of bracket segments to approach each other to reduce the interval therebetween, thereby holding the outer jacket between the tension member and the pair of bracket segments. Further, the bracket segments displaced apply the pressing force to the inner column through the pressed portion of the outer jacket. Thus, the inner column is held through the outer jacket by the pair of bracket segments coupled to the vehicle body so that the steering shaft can be secured in the telescopic direction. Further, if both bracket segments have nearly symmetrical shapes with respect to the steering shaft, the quantities in displacement of the bracket segments are also equal so that the center position of the inner column can be maintained at a definite position, thereby effectively restraining the eccentricity of the steering shaft.

Preferably, on the section orthogonal to the axial line of the outer jacket, when the line coupling the axial line and center of the slit accords with a vertical line, the upper edge of the flange is the highest at the position crossing the vertical line. In accordance with this configuration, the rigidity of the outer jacket can be optimized more satisfactorily.

Preferably, on the section orthogonal to the axial line of the outer jacket, when a line coupling the axial line and center of the slit accords with a vertical line, the upper edge of the flange is not present at the position crossing the vertical line. In accordance with this configuration, the rigidity of the outer jacket can be optimized more satisfactorily.

Preferably, the urging member includes a headed bolt or nut for pressing the side edges of the flange through screw-engagement, and an upper end of each the side edges of the flange is located at a position higher than the head of the headed bolt or the nut. In accordance with this configuration, the urging force by the urging member is can be suitably transmitted to the outer jacket through the flange.

Preferably, the side edges of the flange is tapered to the vertical line. In accordance with such a configuration, the force by the displacement applying member is transmitted through the bracket segments, the diameter of the outer jacket can be easily decreased.

Preferably, the lower edges of the flange are tapered to approach the cylindrical outer periphery of the cylinder at positions nearer to the slit. In this configuration, the diameter of the outer jacket can be decreased easily.

Preferably, the flange includes a first flange located near to the end of the outer jacket and a second flange near to the end thereof, and when the first flange and the second flange are superposed, the upper side of the first flange is exposed at an angle of at least 180° from the slit. In this configuration, the diameter of the outer jacket can be easily decreased.

The steering apparatus according to the third invention is a steering apparatus including

an inner column which rotatably supports a steering shaft;

an outer jacket which incorporates the inner column shiftably in an axial direction, at least a portion of the outer jacket being cylindrical; and

an urging member for urging the inner column radially, wherein the outer jacket includes a flange which extends in a direction leaving an axial line of the outer jacket from the cylindrical outer periphery of the outer jacket and is urged by the urging member, a slit which extends in the axial line direction to cross the flange, and

the outer jacket has rigidity lower on the side far from the slit with respect to the axial line of the outer jacket than on the side near to the slit. In accordance with this configuration, since the slit is provided, the rigidity of the outer jacket is attenuated so that the diameter of the outer jacket can be easily decreased. Further, since the outer jacket has rigidity lower on the side far from the slit with respect to the axial line thereof than on the side near to the slit, the flange can be easily deformed in a direction of closing the slit when it is urged in the direction of 90°, thereby optimizing the rigidity of the outer jacket.

The steering apparatus according to the fourth invention is a steering apparatus including

an inner column which rotatably supports a steering shaft;

an outer jacket which incorporates the inner column shiftably in an axial direction, at least a portion of the outer jacket being cylindrical; and

an urging member for urging the inner column radially, wherein the outer jacket includes a flange which extends in a direction leaving an axial line of the outer jacket from the cylindrical outer periphery of the outer jacket and is urged by the urging member, a slit which extends in the axial line direction to cross the flange, and

the outer jacket has a sectional thickness lower on the side far from the slit with respect to the axial line of the outer jacket than on the side near to the slit. In accordance with this configuration, since the slit is provided, the rigidity of the outer jacket is attenuated so that the diameter of the outer jacket can be easily decreased. Further, since the outer jacket has a sectional thickness lower on the side far from the slit with respect to the axial line thereof than on the side near to the slit, the flange can be easily deformed in a direction of closing the slit when it is urged in the direction of 90°, thereby optimizing the rigidity of the outer jacket.

## BRIEF DESCRIPTION OF THE DRAWINGS

The present invention may be more readily described with reference to the accompanying drawings:

Fig. 1 is a side view of a tilt-telescopic steering apparatus according to an embodiment of this invention.

Fig. 2 is a bottom view of the steering apparatus shown in Fig. 1.

Fig. 3 is a perspective view of the steering apparatus shown in Fig. 1 in its exploded state.

Fig. 4 is a view taken in line IV-IV in Fig. 1 and viewed in a direction of indicated arrow.

Fig. 5 is a view of a first flange when it is viewed from the outside in an axial direction.

Fig. 6 is a view showing a second flange when an outer jacket is cut between a first flange and the second flange.

Fig. 7 is a side view of a tilt-telescopic steering apparatus according to an embodiment of this invention in an assembled state when viewed in a direction of arrow VIII indicated in Fig. 3.

Fig. 8 is a view showing the first flange of an outer jacket according to the second embodiment of this invention which is similar to Fig. 5.

Fig. 9 is a view showing the second flange of the outer jacket according to the second embodiment of this invention which is similar to Fig. 6.

Fig. 10 is a view showing the first flange of an outer jacket according to the third embodiment of this invention which is similar to Fig. 5.

Fig. 11 is a view showing the second flange of the outer jacket according to the third embodiment of this invention which is similar to Fig. 6.

Fig. 12 is a view showing the first flange of an outer jacket according to the fourth embodiment of this invention which is similar to Fig. 5.

Fig. 13 is a view showing the second flange of the outer jacket according to the fourth embodiment of this invention which is similar to Fig. 6.

## DETAILED DESCRIPTION OF THE PREFERRED EMBODIMENTS

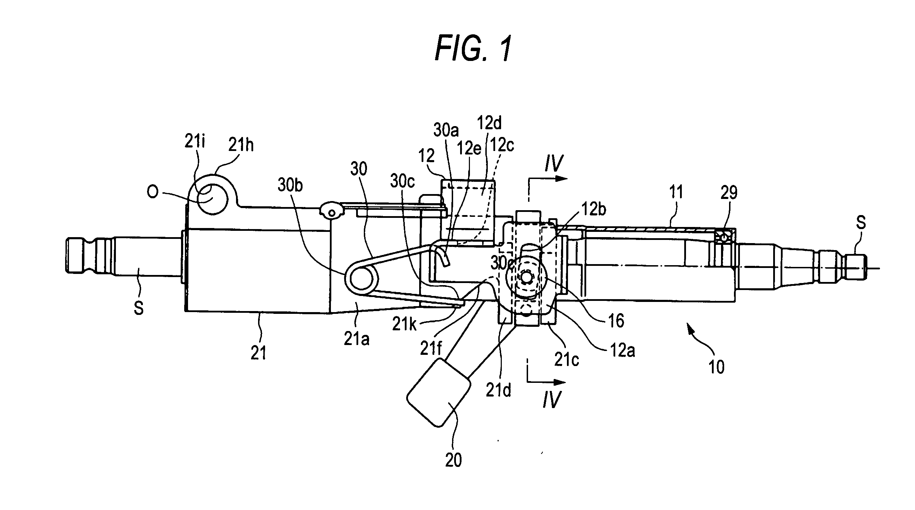

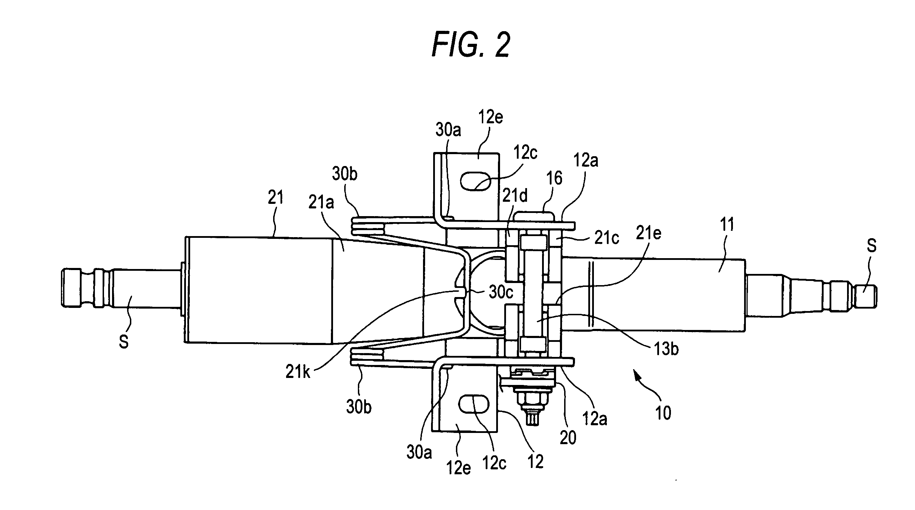

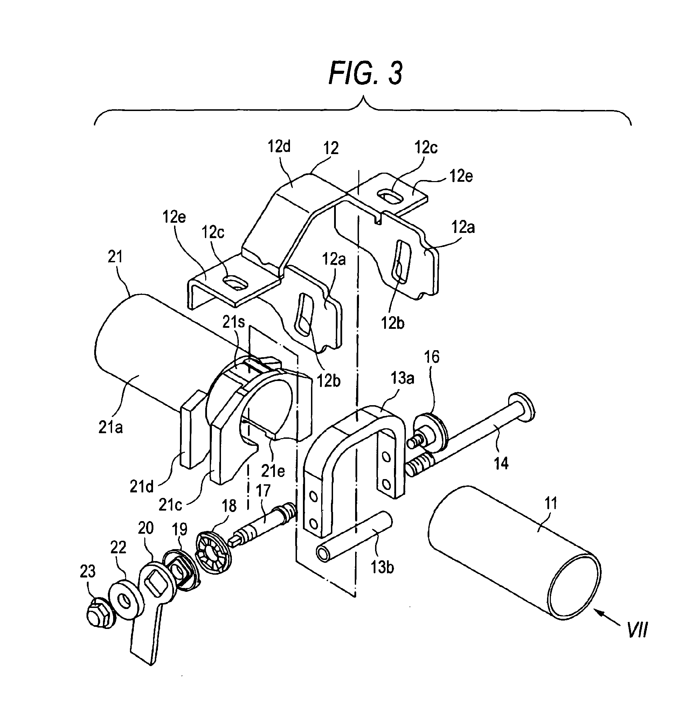

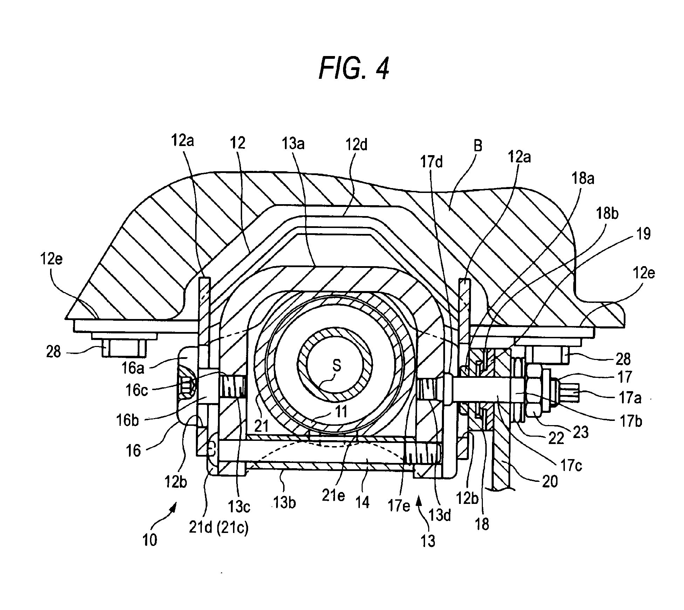

Now referring to the drawings, an explanation will be given of a tilt-telescopic steering apparatus according to an embodiment of this invention. Fig. 1 is a side view of a tilt-telescopic steering apparatus 10 according to an embodiment of this invention. Fig. 2 is a bottom view of the steering apparatus 10 shown in Fig. 1. Fig. 3 is a perspective view of the steering apparatus shown in Fig. 1 in its exploded state (a coil spring 30 is not shown). Fig. 4 is a view taken in line IV-IV in Fig. 1 when viewed in an arrow direction.

As seen from Fig. 2, an attached bracket 12 has a structure in which bracket segments 12a, 12a extending in parallel in a vertical direction are coupled by a coupling plate 12d, the bracket segments having a pair of body attaching holes 12c (formed in a pair of body attaching planes 12e, respectively) which are employed to attach the bracket 12 to a vehicle body B (Fig. 4) by bolts 28 (Fig. 4). The attached bracket 12 is made by bending a single plate material. The respective bracket segments 12a, 12a has equal plate thicknesses and shapes which are line-symmetrical with respect to a vertical line passing a steering axial line.

As seen from Fig. 4, a tension member 13 is arranged between the bracket segments 12a and 12a. The tension member 13 includes a sectional U-shaped body 13a with its lower part opened and a tube 13b which is fixed to the body 13a by a bolt 14; the bolt 14 is bridged between the lower ends of both sides walls of the body 13a and inserted in the body 13a. The tension member 13 is attached to sandwich the outer periphery at the end of the outer jacket 21. Namely, the tension member 13 can be divided into the body 13a and the tube 13b, so that it is excellent in the assembling property when loaded in the vehicle. On the other hand, in the state where it is fixed by the bolt 14, the tension member 13 has a ring shape which is circumferentially continuous and hence provides high rigidity. Such a structure can be made by a smaller number of components. The bolt 14 may be a standard product. Further, the tube 13b can be made by only cutting a cylindrical tube in a predetermined length. Thus, the tension member 13 can be made at a lower cost. The tube 13b may be also made by welding a rolled plate material.

As seen from Figs. 1 and 2, the outer jacket 21 includes a cylinder 21a and a pair of first plate-like flange 21c (near to the end) and second plate-like flange 21d (far from the end) which are arranged axially apart to sandwich the tension member 13 on the outer periphery at the end of the cylinder 21a. The outer jacket 21 has an ear 21h formed at the upper position of the left end of the cylinder 21a in Fig- 1. The ear 21h has a through-hole 21i. Using a bolt (not shown) passed through the through-hole 21i and fixed to the vehicle body, the outer jacket 21 is swingably attached to the vehicle body 21. The cylinder 21a has a notch 21f having a triangular shape when viewed in direction indicated in Fig- 1 on the lower surface of the outer jacket 21 and located at a more forward position of the vehicle than the flanges 21c and 21d. The cylinder 21a internally holds the inner column 11 on the lower surface of the outer jacket 21. The cylinder 21a is pivotally supported to the vehicle (not shown) (vertically in Fig. 1) around a pivoting point O which accords with the axial line of the through-hole 21i. Between the flanges 21c and 21d serving as the pressed portion, the tension member 13 is arranged. The cylinder 21a has an upper flat surface 21s between the flanges 21c and 21d so that the tension member 13a is stably mounted on the cylinder 21a. Incidentally, at the lower portion of the cylinder 21a, as seen from Fig. 2, a slit 21e is formed to extend axially across at least the flanges 21c and 21d from the end of the cylinder 21a. Regardless of this embodiment, the line connecting the centers of fixing members 16 and 17 may cross the axial of the inner column 11.

A steering shaft S is internally passed through the cylindrical inner column 11 sheathed by the outer jacket 21, and rotatably supported by the inner column 11 by a bearing 29 (Fig. 1) . The inner column 11 may have a long slot serving as a telescopic stopper formed in parallel to the axis of the steering shaft S and engaged with a bolt implanted in the outer jacket. However, this structure is not indispensable.

Each bracket segment 12a has a tilting groove 12b which serves as a part of the arc around a pivoting point O. As seen from Fig. 1, The tilting groove 12b is located at the position displaced backward of the vehicle in an axial line of the inner column from a body attaching hole 12c of the bracket 12 which is the body attaching portion arranged at a height near the axial line of the steering shaft S (see Figs. 1 and 2) . From the left side in Fig. 4, a fixing member 16 is passed through the tilting groove 12b. From the right side of in Fig. 4, a fixing member 17 is passed through the tilting groove 12b. Incidentally, the end of the bracket segment 12a on the side of the tilting groove 12b with respect to the body attaching hole 12c may be bent.

The fixing bolt 16 which is a headed bolt includes a disk-shaped head 16a which is larger than the width of the tilting groove 12b on the left side in Fig. 4 and has a tool engaging hole, a cylindrical tilt-guiding segment 16b which is guided in engagement in the tilting groove 12b, and a male screw 16c which is firmly screw-engaged in a screw hole 13c formed in the body 13a of the tension member 13.

On the other hand, the fixing member 17 includes a hexagonal head 17a to which a tool is to be engaged, a first screw segment 17b, a cylindrical shaft 17c, a small flange 17d and a second screw segment 17e. The second screw segment 17e is firmly screw-engaged in the screw hole 13d formed in the body 13a of the tension member 13 so that the small flange 17d is in contact with the surface 13a of the body 13. On the periphery of the shaft 17c arranged are a fixed cam 18 (which consists of a tilt-guiding segment 18a having an elliptical section engaged to the width of the tilting groove 12b and fixed cam segment 18b having a larger diameter than the width), a movable cam 19 having a cam face to be engaged to the fixed cam segment 18b, an operating lever 20 which rotates integrally to the fixed cam 19 and a thrust bearing (which may be a rolling or a sliding bearing) 22. These elements are attached to the shaft 17c by a nut which is firmly screw-engaged to the first screw segment 17b. Incidentally, the fixed cam 18, movable cam 19, bracket segments 12a, 12a constitute anurgingmember defined in claims. The fixing member 17, nut 23 and fixing member 16 constitute a fixing member in claims.

A coil spring 30 is arranged to surround the inner column 11 and to be secured, at its ends 30a, to the respective bracket segments 12a. The coil spring 30 has a pair of coil segments 30b on its both sides and a central contact segment 30c which is in contact with the lower surface of the inner column 11 exposed from the notch 21f of the outer jacket 21. The lower surface of the inner column 11 is, therefore, always urged upward by the urging force of the coil spring 30. Incidentally, a projection 21k is provided at the lowermost position of the notch 21f to prevent the coil spring 30 from coming off.

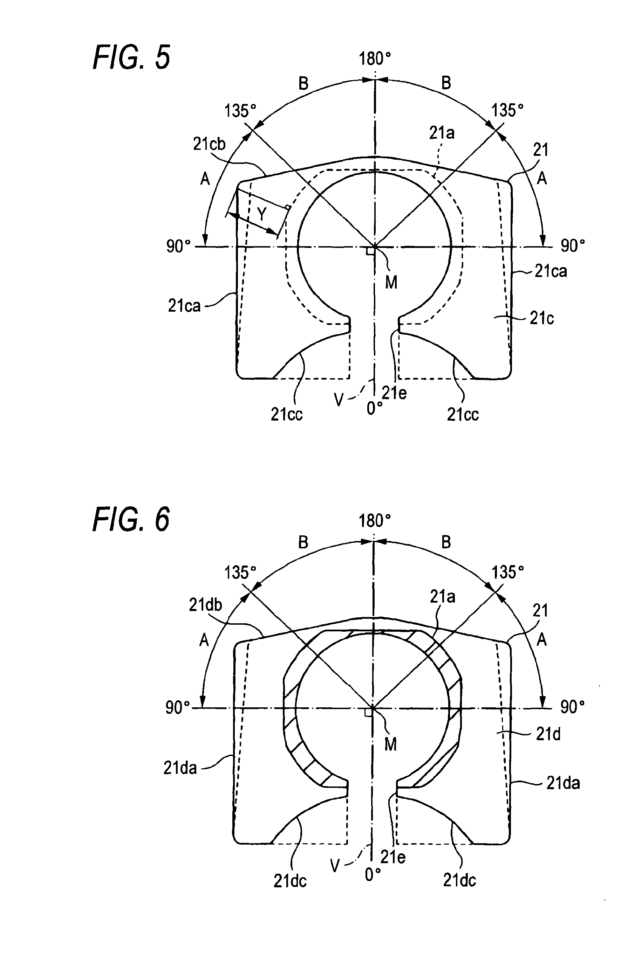

Fig. 5 is a view of the first flange 21c when viewed from the outside in the axial direction. Fig. 6 is a view of the second flange 21d viewed when the outer jacket 21 is cut between the first flange 21c and the second flange 21d. In the state shown in Figs. 5 and 6, it is assumed that a vertical line V passes the axial line M of the outer jacket 21 and the center of the slit 21e (it should be noted that this is not true when the outer jacket is actually installed on the vehicle body) .

In Fig. 5, the first flange 21c includes side edges 21ca, 21ca in parallel to the vertical line V, a center hill-like upper edge 21cb on the upper side opposite to the slit 21e with respect to the axial line M and tapered lower edges 21cc which rise towards the slit 21e (i.e. approach the outer periphery of the cylindrical portion 21a) . In Fig. 6, the second flange 21d includes side edges 21da, 21da in parallel to the vertical line V, a center hill-like upper edge 21db and tapered lower edges 21dc which rise towards the slit 21e (i.e. approach the outer periphery of the cylindrical portion 21a) . Namely, the first flange 21c and the second flange 21d have the same shape.

An explanation will be given of the adjusting operation of the steering apparatus according to this embodiment. When an operator rotates the operating lever 20 in a tightening direction, the concave portion of the fixed cam segment 18b of the fixed cam 18 in the fixing member 17 and the concave portion of the movable cam 19 are engaged to each other so that a force is generated in a direction leaving each other. At this time, the bracket segment 12a on the right side in Fig. 4 pressed by the fixed cam 18 shits leftwards. On the other hand, the fixing member 17 pressed rightwards by the movable cam 19 shifts the tension member 14 rightwards. Correspondingly, the fixing member 16 also moves rightwards so that the inside of the tilting groove 12b is pressed to the sides of the flanges 21c and 21d to provide a suitable pressing force. Thus, the outer jacket 21 is secured to the bracket segment 12a, thereby stopping the displacement of the inner column 11 in the tilting direction.

On the other hand, since the bracket segment 12a on the right side in Fig. 4 pressed by the fixed cam 18 shifts leftwards on the basis of the rotation of the operating lever 20 in the tightening direction, it is brought into contact with the right half of the flanges 21c, 21d to be shifted leftward likewise. Further, the force given to the tension member 13 is transmitted to the fixing member on the opposite side so that the bracket segment 12a on the left side in Fig. 4 shifts rightwards. Then, the bracket segment 12a on the left side is brought into contact with the left half of the flanges 21c, 21d to be shifted rightward likewise. Thus, pressing force is given to the outer periphery of the outer jacket 21. In this way, since the outer jacket 21 is pressed from both sides, the slit 21e is deformed so as to close. As a result, the inner diameter of the outer jacket 21 is reduced so that the inner column 11 can be held by a suitable force. Through the operation described above, the pair of bracket segments 12a of the bracket 12 are deformed to close.

In accordance with this embodiment, since the two bracket segments 12a have approximately the same shape and plate-thickness, i.e. equal bending elastic coefficients (i.e. rigidities) , the bracket segments 12a are subj ected to the force approaching each other by the tightening operation of the operating lever 20 and are shifted by approximately equal quantities. Thus, the inner column 11 suffers fromthepressing force from both left and right sides in Fig. 4 by the flanges 21c and 21d and hence is fixed so that its center accords with the position of dividing the distance between the bracket segments 12a, 12a into two. This stops the displacement in the telescopic direction of the inner column 11 and restrains the eccentricity of the steering shaft S.

On the other hand, when the operator rotates the operating lever 20 in a loosening direction, in Fig. 4, the fixed cam 18 and the movable cam 19 are disengaged, in their convex portions, from each other so that they can be adjacent to each other. Thus, both bracket segments 12a leave each other so that the outer jacket 21 is located to be free from both bracket segments 12a. So the tilt-guiding segment 16b of the fixing member 16 and the tilt-guiding segment 18b of the fixed cam 18 can be shifted while they are guided along the tilt grooves 12b of the bracket segments 12a. Further, owing to reduction in the tightening force of the outer jacket 21, the inner column 11 can be shifted in the axial direction (placed in a state where it is shiftable in the axial direction) so that the tilting direction and telescopic direction of the inner column can be optionally adjusted.

In this case, in order to make the telescopic adjustment, a certain gap is required between the inner periphery of the outer jacket 21 and the inner periphery of the inner column 11. However, when the operating lever 20 is rotated in the loosening direction, the presence of the gap is transmitted as a backlash of the steering wheel to the operator. At this time, the operator may feel incongruous sense. On the other hand, in accordance with this embodiment, owing to the urging force of the coil spring 30 with their ends secured to the bracket segments 12a, the inner column 11 is always urged upward. Thus, owing to such an urging force, the outer peripheral surface of the inner column 11 is pressed on the inner periphery surface of the outer jacket 21 so that the backlash can be excluded, thereby avoiding giving incongruous sense to the operator. Incidentally, the coil spring 30 has a function of hooking the inner column 11 at a medium position of tilting by the use of its urging force during the tilt adjustment so that the steering shaft S does not swing downward owing to the weight of the steering wheel (not shown).

Further, in this embodiment, since the outer jacket 21 has the slit 21e, the end rigidity of the outer jacket 21 is reduced so that the diameter of the outer jacket 21 can be easily decreased, thereby enhancing the holding force of the inner column 11. Further, as seen from Figs. 5 and 6, assuming that the center of the slit 21e is at an angle of 0°, the average value of the radial distance Y from the cylindrical outer periphery 21a of the outer jacket 21 to the tip of the flanges 21c, 21d within a range A from 90° to 135° around the axial line M of the outer jacket 21 is made larger than that within a range B from 135° to 180°. Because of such a configuration, the flanges 21d, 21d can be easily deformed in a direction of closing the slit 21e when they are urged in the direction of 90°. Further, the thickness of the flanges 21c, 21d is made smaller on the side opposite to the slit 21e with respect to the axial line M of the outer jacket 21 (in the range of B) than that on the side of the slit 21e, thereby decreasing the rigidity of the outer jacket 21 for reduction in the diameter of the outer jacket 21.

Further, in the state shown in Figs. 5 and 6, the upper edges 21cb and 21db of the flanges 21c and 21d are the highest at the position crossing the vertical line and descend gradually toward the side edges 21ca and 21da, thereby further decreasing the rigidity of the outer jacket 21.

As a modification of this embodiment, the side edges 21ca and 21da of the flanges 21c and 21d are tapered with respect to the vertical line V so that the widths of the flanges 21 and 21d increase toward the lower side where the slit 21e is located (indicated by dotted lines in Figs. 5 and 6). In accordance with configuration, the parallel bracket segments 12a and 12a (Fig. 4) are brought in strong contact with the lower portions of the side edges 21 so that the diameter of the outer jacket 21 can be reduced more easily. This is preferred.

As another modification of this embodiment, the lower edges 21cc and 21dc of the flanges 21c and 21d may be made horizontal as indicated by dotted lines in Figs. 5 and 6.

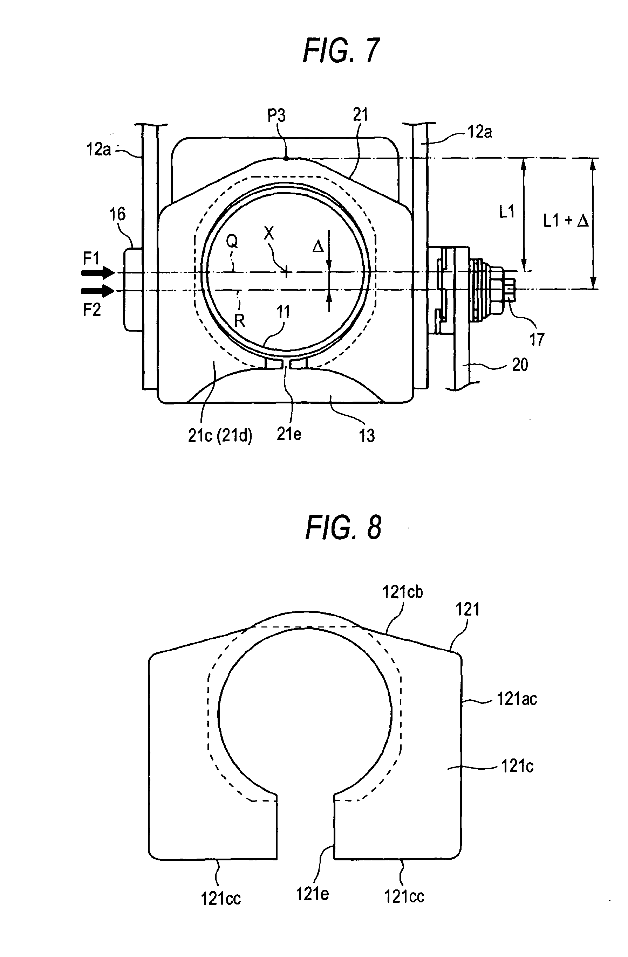

Fig. 7 is a view of the tilt-telescopic steering apparatus according to this embodiment in an assembled state viewed in the direction of arrow VII in Fig. 3. As seen from Fig. 7, in this embodiment, the line coupling the centers of the fixing members 16 and 17 is apart from the axial line X of the inner column 11. Concretely, assuming that the pressing force necessary to hold the inner column 11 given by the fixing members 16 and 17 is F1, the pressing force F2 necessary to hold the inner column 11 given by the fixing members 16 and 17 in this embodiment in which the line R coupling the centers of the fixing members 16 and 17 is shifted by distance $\Delta$ downward from the axial line X of the inner column 11 in Fig. 7 is expressed by

$$F2 = (L1/ (L1 + \Delta)) \cdot F1$$

{where L1 represents the distance from point P3 from the axial line X of the inner column 11}. Since L1 < L1 + $\Delta$, in accordance with this embodiment, the inner column 11 can be held by the smaller pressing force F2 by the theory of leverage.

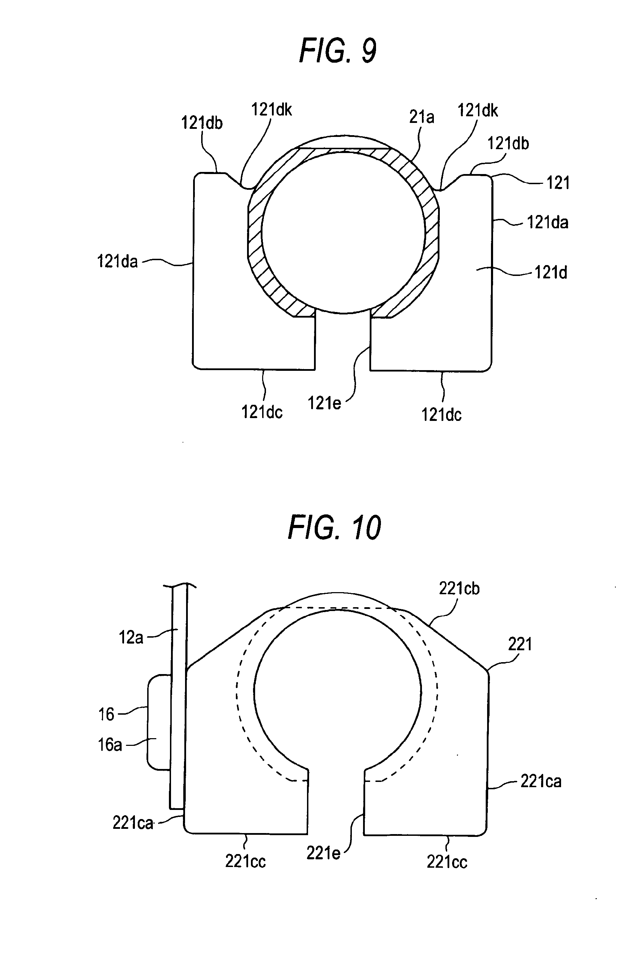

Fig. 8 is a view showing the first flange 121c of an outer jacket 121 according to the second embodiment of this invention which is similar to Fig. 5. Fig. 9 is a view showing the second flange 121c of the outer jacket 121 according to the second embodiment of this invention which is similar to Fig. 6.

In this embodiment, the shapes of the first flange 121c and the second flange 121d are different from each other, unlike the embodiment shown in Figs. 5 and 6. Concretely, the upper edge 121db of the second flange 121d terminates at the outer periphery of the cylinder 21a and particularly, have notches 21dk sinking downward before it terminates.

Thus, when the shapes of the first flange 121c and the second flange 121d are superposed, the upper side of the first flange 121c (side at an angle of 180° from the slit 121e) is exposed. By cutting the upper part of the second flange 121d in such a manner, the rigidity of the outer jacket 121 on the side of the second flange 121d is attenuated so that the diameter of the outer jacket 121 can be easily decreased.

In this embodiment, unlike the embodiment of Fig. 5, the upper edges of the flanges 121c and 121d are not located at the position crossing the vertical line V, but constitute the outer periphery of the cylinder 21a so that the rigidity of the outer jacket 21 is further attenuated. Incidentally, in Fig. 6, the flange 121d appears to be located at the position crossing the vertical line V. However, this is owing to the fact that the upper part of the cylinder 21a between the flanges 121c and 121d is cut. The flange 121d is not present at the position crossing the vertical line V. The remaining configuration, which is the same as that of the previous embodiment, is not explained here.

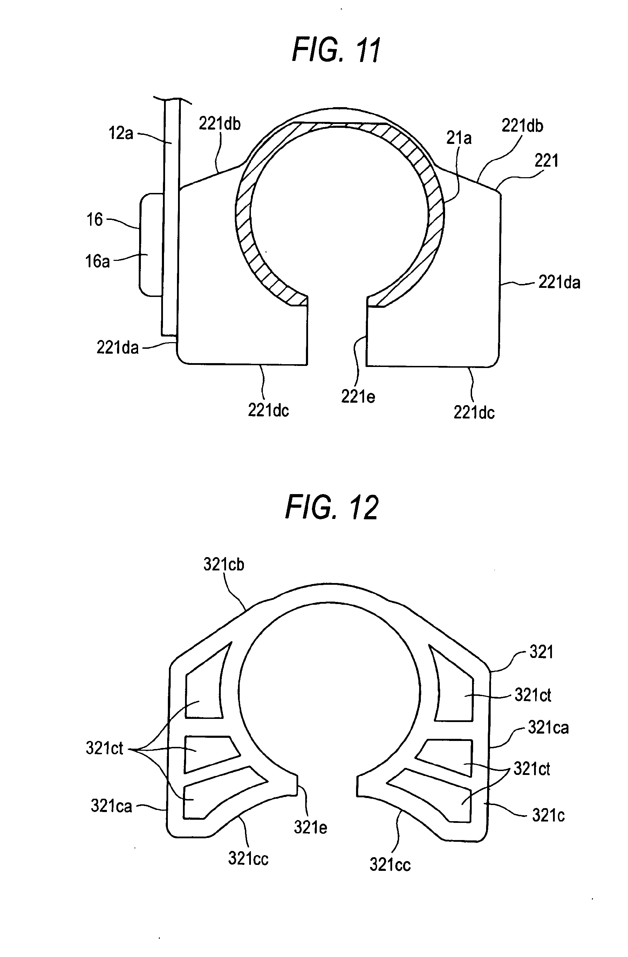

Fig. 10 is a view showing the first flange 221c of an outer jacket 221 according to the third embodiment of this invention which is similar to Fig. 5. Fig. 11 is a view showing the second flange 221c of the outer jacket 121 according to the third embodiment of this invention which is similar to Fig. 6. In Figs. 10 and 11, on the left side, the bracket segment 12a and head of the fixing member 16 are also illustrated.

In this embodiment, as seen from Fig. 10, the upper end of the side edge 221ca of the first flange 221c terminates at a position higher than the head 16a of the fixing member 16. On the other hand, as seen from Fig. 11, the upper end of the side edge 221da of the second flange 221d also terminates at a position higher than the head 16a of the fixing member 16. Because of such a configuration, the urging force applied from the fixing member 16 can be effectively transmitted to the flanges 221c and 221d. Incidentally, the same configuration can be adopted also in the case where the fixing member is a nut. The remaining configuration, which is the same as that of the previous embodiment, is not explained here.

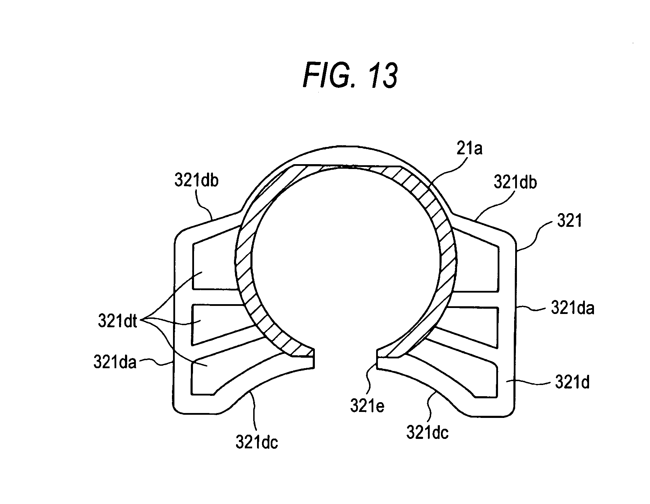

Fig. 12 is a view showing the first flange 321c of an outer jacket 321 according to the fourth embodiment of this invention which is similar to Fig. 5. Fig. 13 is a view showing the second flange 321c of the outer jacket 121 according to the fourth embodiment of this invention which is similar to Fig. 6. The outer jacket 321 is generally made by die-casting the metallic material such as aluminum, zinc or magnesium. At this time, by adjusting the die, thin walls 321ct and 321dt as shown can be formed on the surface of the flanges 321c and 321d, thereby realizing the light weight of the flanges without attenuating the rigidity thereof. Incidentally, the lower edges 321cc of the first flange 321c and the lower edge 321dc of the second flange 321d are tapered to descend as they leave the slit 21e. The remaining configuration, which is the same as that of the previous embodiment, is not explained here.

The detailed explanation has been hitherto given of this invention with reference to the various embodiments. This invention should not be construed to be limited to the embodiments, but can be modified or improved without departing from the sprit of this invention. For example, in the above embodiments, although the slit was located on the lower side of the outer jacket, the slit may be located at the upper side of the outer jacket. In this case, the sectional shape of the flange is upside down from the case in the above embodiments. In the embodiments, although the outer jacket was arranged on the lower side whereas the inner column was arranged on the upper side, a layout may be adopted in which the outer jacket was arranged on the upper side whereas the inner column was arranged on the lower side. In this case, the distance between the first flange and the second flange in the axial direction of the inner column is lengthened so that the tension member is moved between the flanges during the telescopic adjustment. Additionally, although the steering apparatus capable of making tilt-telescopic adjustment were described with reference to the various embodiments, this invention can also be applied to the steering apparatus capable of making only the telescopic adjustment.

## Claims

1. A steering apparatus including

an inner column which rotatably supports a steering shaft;

an outer jacket which incorporates the inner column shiftably in an axial direction, at least a portion of the outer jacket being cylindrical; and

an urging member for urging the inner column radially;

wherein the outer jacket includes a flange which extends in a direction leaving an axial line of the outer jacket from the cylindrical outer periphery of the outer jacket and is urged by the urging member, and a slit which extends in the axial line direction to cross the flange; and

assuming that the center of the slit is at an angle of 0°, the average value of the radial distance from the cylindrical outer periphery of the outer jacket to the tip of the flange within a range from 90° to 135° around the axial line of the outer jacket is larger than that within a range from 135° to 180°.

2. The steering apparatus according to claim 1,

wherein, on a section orthogonal to the axial line of the outer jacket, when a line coupling the axial line and center of the slit accords with a vertical line, the upper edge of the flange is the highest at the position crossing the vertical line.

3. The steering apparatus according to claim 1,

wherein on a section orthogonal to the axial line of the outer jacket, when the line coupling the axial line and center of the slit accords with a vertical line, the upper edge of the flange is not present at the position crossing the vertical line.

4. The steering apparatus according to claims 2 or 3,

wherein the urging member includes a headed bolt or nut for pressing the side edges of the flange through screw-engagement, and an upper end of each the side edges of the flange is located at a position higher than the head of the headed bolt or the nut.

5. The steering apparatus according to any one of claims 2 to 4, wherein the side edges of the flange are tapered to the vertical line.

6. The steering apparatus according to any one of claims 1 to 6, wherein the lower edges of the flange are tapered to approach the cylindrical outer periphery of the outer jacket at positions nearer to the slit.

7. The steering apparatus according to any one of claims 1 to 6,

wherein the flange includes a first flange located near to the end of the outer jacket and a second flange far from to the end thereof; and,

when the first flange and the second flange are superposed, the second flange is exposed at an angle of at least 180° from the slit.

8. A steering apparatus for supporting a steering shaft attached to a steering wheel shiftably in an axial direction, comprising:

an inner column which rotatably supports the steering shaft;
a pair of bracket segments attached to a vehicle body and arranged at opposite positions with respect to the axial line of the steering shaft;
a tension member extended between the pair of bracket segments;
two fixing members for fixing the tension member from outside of the pair of bracket segments;
a displacement applying member arranged between the tension member and the fixing members for applying a relative displacement between the bracket segments and the fixing members in interlock with a movement of an operating lever; and
an outer jacket held to the vehicle body having a flange with an outer periphery to be in contact wi th the bracket segments by the relative displacement of the bracket segments at least between the pair of bracket segments, and an inner periphery wrapping the outer periphery of the inner column, at least a portion of the outer jacket being cylindrical;

wherein the pair of bracket segments approach each other by the relative displacement given by the applying member so that a pressing force is given to the inner column through the flange of the outer jacket and the inner column is held at its axial position by the bracket segments through the outer jacket;

the outer jacket includes a slit which extends in the axial direction from the end of the outer jacket to cross the flange; and

assuming that the center of the slit is at an angle of 0°, the average value of the radial distance from the cylindrical outer periphery of the outer jacket to the tip of the flange within a range from 90° to 135° around the axial line of the outer jacket is made larger than that within a range from 135° to 180°.

9.   The steering apparatus according to claim 8,
wherein on a section orthogonal to the axial line of the outer jacket, when a line coupling the axial line and center of the slit accords with a vertical line, the upper edge of the flange is the highest at the position crossing the vertical line.

10.   The steering apparatus according to claim 8,
wherein, on a section orthogonal to the axial line of the outer jacket, when the line coupling the axial line and center of the slit accords with a vertical line, the upper edge of the flange is present at the position crossing the vertical line.

11.   The steering apparatus according to claim 9 or 10,
wherein the urging member includes a headed bolt or nut for pressing the side edges of the flange through screw-engagement, and an upper end of each the side edges of the flange is located at a position higher than the head of the headed bolt or the nut.

12.   The steering apparatus according to any one of claims 9 to 11, wherein the side edges of the flange are tapered to the vertical line.

13.   The steering apparatus according to any one of claims 8 to 12, wherein the center line of the fixing member is located on the side of the slit with respect to the axial line of the inner column.

14.   The steering apparatus according to any one of claims 8 to 13, wherein the lower edges of the flange are tapered to approach the cylindrical outer periphery of the outer jacket at positions nearer to the slit.

15.   The steering apparatus according to any one of claims 8 to 14, wherein the flange includes a first flange located near to the end of the outer jacket and a second flange far from the end thereof, and when the first flange and the second flange are superposed, the first flange is exposed at an angle of at least 180° from the slit.

16.   A steering apparatus, comprising:

an inner column which rotatably supports a steering shaft;
an outer jacket which incorporates the inner column shiftably in an axial line direction, at least a portion of the outer jacket being cylindrical; and
an urging member for urging the inner column radially;

wherein the outer jacket includes a flange which extends in a direction leaving an axial line of the outer jacket from the cylindrical outer periphery of the outer jacket and is urged by the urging member, a slit which extends in the axial line direction to cross the flange; and

the outer jacket has rigidity lower on the side far from the slit with respect to the axial line thereof than on the side near to the slit.

17.   A steering apparatus, comprising:

an inner column which rotatably supports a steering shaft;
an outer jacket which incorporates the inner column shiftably in an axial line direction, at least a portion of the outer jacket being cylindrical; and
an urging member for urging the inner column radially;

wherein the outer jacket includes a flange which extends in a direction leaving the axial line from the cylindrical outer periphery of the outer jacket and is urged by the urging member, a slit which extends in the axial line direction to cross the flange; and

the outer jacket has a sectional thickness lower on the side far from the slit with respect to an axial line of the outer jacket than on the side near to the slit.

# FIG. 1

EP 1 529 714 A2

FIG. 2

# FIG. 3

## FIG. 4

# FIG. 5

# FIG. 6

## FIG. 7

## FIG. 8

## FIG. 9

## FIG. 10

EP 1 529 714 A2

# FIG. 11

12a

221db

16

16a

221da

221dc

221e

221db

21a

221

221da

221dc

# FIG. 12

321cb

321ct

321ct

321ca

321ca

321cc

321e

321

321ct

321ca

321ct

321c

321cc

18

# FIG. 13